## Europäisches Patentamt

## European Patent Office

## Office européen des brevets

(11) Numéro de publication: **0 201 425**
**B1**

(12) **FASCICULE DE BREVET EUROPEEN**

(45) Date de publication du fascicule du brevet:
**08.03.89**

(51) Int. Cl.⁴: **B60G 21/06**

(21) Numéro de dépôt: **86400970.9**

(22) Date de dépôt: **05.05.86**

(54) **Anti-roulis hydro-pneumatique.**

(30) Priorité: **09.05.85 FR 8507328**

(43) Date de publication de la demande:
**17.12.86 Bulletin 86/46**

(45) Mention de la délivrance du brevet:
**08.03.89 Bulletin 89/10**

(84) Etats contractants désignés:
**DE GB IT**

(56) Documents cités:
**FR-A- 2 409 873**
**GB-A- 927 745**
**US-A- 2 115 159**
**US-A- 3 328 019**
**US-A- 3 606 374**
**US-A- 3 736 000**
**US-A- 3 752 497**
**US-A- 3 871 635**

(73) Titulaire: **AUTOMOBILES PEUGEOT, 75, avenue de la
Grande Armée, F-75116 Paris(FR)**
Titulaire: **AUTOMOBILES CITROEN, 62 Boulevard
Victor-Hugo, F-92200 Neuilly-sur-Seine(FR)**

(72) Inventeur: **Lachaize, Henri Gabriel, 13, avenue Paul
Langevin, F-92230 Fontenay-Aux-Roses(FR)**

(74) Mandataire: **Boivin, Claude, 9, rue Edouard-Charton,
F-78000 Versailles(FR)**

ACTORUM AG

## Description

La présente invention concerne un anti-roulis pour véhicule automobile, destiné à s'opposer à l'inclinaison de la caisse du véhicule, dans un virage, sous l'effet de la force centrifuge; elle concerne plus particulièrement un anti-roulis pour un véhicule muni d'une suspension hydro-pneumatique.

Dans un véhicule muni d'une suspension hydro-pneumatique, les moyens de suspension comprennent, pour chaque roue du véhicule, un vérin dont l'un des éléments, cylindre ou piston, est relié mécaniquement à la partie suspendue du véhicule, son autre élément étant relié mécaniquement à la partie non suspendue, et dont la chambre sous pression est raccordée à un accumulateur hydro-pneumatique.

Une suspension de ce genre, lorsque la correction de hauteur est assurée par essieu, ne s'oppose pas aux sollicitations du véhicule en roulis et il est nécessaire de prévoir jusqu'à présent, dans les véhicules munis d'une suspension hydro-pneumatique, des dispositifs anti-roulis mécaniques, par exemple du type à barres de torsion.

Le brevet US 3 606 374 décrit un anti-roulis hydro-pneumatique pour véhicule automobile muni d'une suspension hydro-pneumatique.

Dans cet anti-roulis chaque vérin comporte un piston étagé formé de deux pistons qui sont raccordés par une tige traversant de manière étanche une paroi transversale du cylindre et qui délimitent un volume d'extrémité de suspension compris entre l'un des pistons et l'extrémité du cylindre reliée à l'accumulateur hydro-pneumatique, un premier volume de roulis, compris entre ce piston et la paroi transversale, et un second volume de roulis compris entre la paroi transversale et le second piston, les premiers volumes de roulis de deux vérins de droite étant raccordés aux seconds volumes de roulis des deux vérins de gauche ainsi qu'à un premier accumulateur hydro-pneumatique de roulis, alors que les premiers volumes de roulis des deux vérins de gauche sont raccordés aux seconds volumes de roulis des vérins de droite ainsi qu'à un second accumulateur hydro-pneumatique de roulis. Cet anti-roulis comporte un distributeur hydraulique admettant une position dans laquelle les circuits hydrauliques des accumulateurs hydro-pneumatiques de roulis sont isolés l'un de l'autre.

La présente invention a pour objet un anti-roulis de ce genre qui peut être mis hors d'action si on le désire, par exemple en position de ligne droite.

Cet anti-roulis est caractérisé en ce que le distributeur hydraulique admet une seconde position dans laquelle ces circuits hydrauliques sont raccordés l'un à l'autre mais isolés normalement aussi bien de la source de pression que du réservoir de liquide hydraulique, et en ce que l'anti-roulis comporte en outre des moyens pour que les circuits hydrauliques des accumulateurs hydro-pneumatiques de roulis soient isolés l'un de l'autre au-delà d'un seuil d'angle au volant de direction et raccordés en deçà du même seuil.

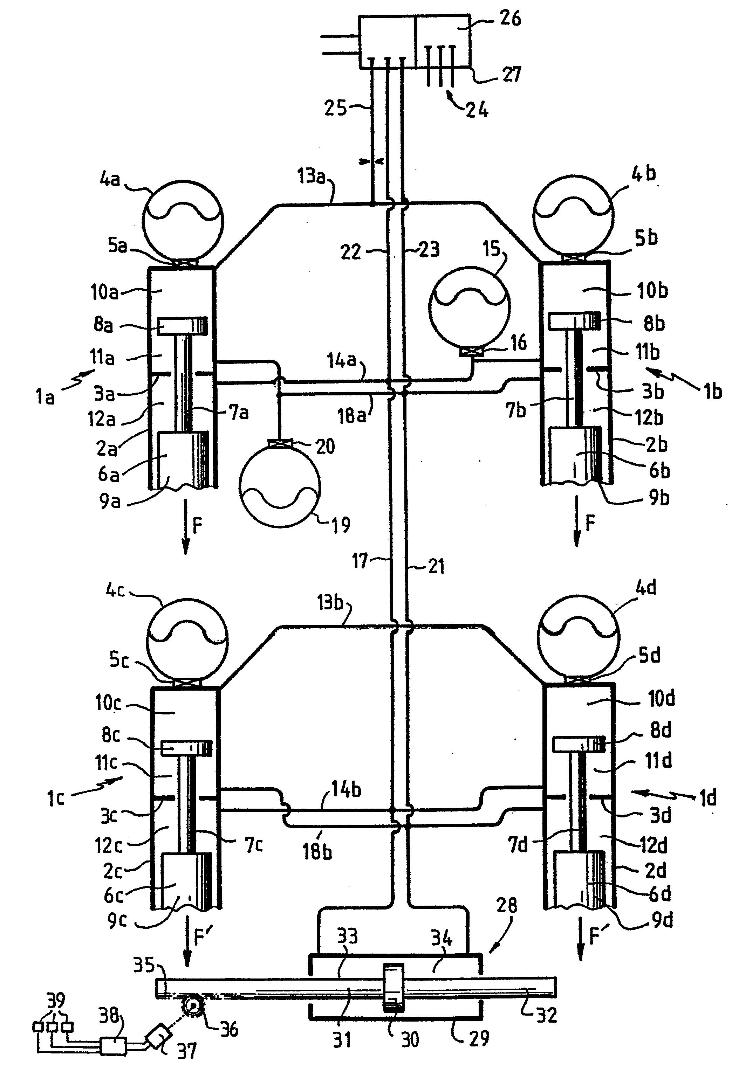

On a décrit ci-après, à titre d'exemple non limitatif, une suspension hydro-pneumatique munie de l'anti-roulis selon l'invention, avec référence à la Figure Unique du dessin annexé qui est un schéma de cette suspension.

Au dessin, on voit quatre vérins de suspension 1a, 1b, 1c et 1d afféctés chacun à l'une des roues du véhicule, respectivement à la roue avant gauche, à la roue avant droite, à la roue arrière gauche et à la roue arrière droite. Chacun de ces vérins comporte un cylindre 2a, 2b, 2c ou 2d qui est muni d'une cloison transversale 3a, 3b, 3c ou 3d et dont l'extrémité supérieure communique avec un accumulateur hydro-pneumatique à membrane 4a, 4b, 4c ou 4d, par l'intermédiaire d'un amortisseur 5a, 5b, 5c ou 5d.

Dans chaque cylindre est monté coulissant un piston étagé 6a, 6b, 6c ou 6d qui est relié à un bras support de roue, alors que le cylindre est relié à la caisse du véhicule. Chacun des pistons étagés comprend un piston supérieur 8a, 8b, 8c ou 8d et un piston inférieur 9a, 9b, 9c ou 9d qui est relié au piston supérieur correspondant par une tige intermédiaire 7a, 7b, 7c ou 7d traversant de manière étanche la paroi transversale du cylindre.

Chacun des pistons étagés délimite ainsi trois volumes dans le cylindre dans lequel il est monté:
- un volume supérieur 10a, 10b, 10c ou 10d compris entre le piston supérieur et l'extrémité du cylindre reliée à l'accumulateur hydro-pneumatique;
- un premier volume intermédiaire 11a, 11b, 11c ou 11d compris entre le piston supérieur et la paroi transversale;
- un second volume intermédiaire 12a, 12b, 12c ou 12d compris entre la paroi transversale et le piston inférieur.

Les volumes supérieurs 10a et 10b des cylindres des vérins d'un même essieu sont reliés entre eux par un conduit 13a lui-même relié d'une manière connue et non représentée à un correcteur de hauteur et à un accumulateur hydro-pneumatique à pression régulée.

De manière analogue, un conduit 13b relie les volumes supérieurs 10c et 10d des cylindres des vérins de l'autre essieu, le conduit 13b étant également relié à un correcteur de hauteur et à un accumulateur hydro-pneumatique.

Dans ces conditions, on voit que les volumes supérieurs 10a, 10b, 10c et 10d assurent la suspension verticale proprement dite du véhicule et travaillent au "pompage".

Un conduit 14a relie le premier volume intermédiaire 11b du vérin de droite 1b de l'un des essieux au second volume intermédiaire 12a du vérin de gauche de cet essieu, ainsi qu'à un accumulateur hydro-pneumatique 15 par l'intermédiaire d'un amortisseur 16. Un conduit 14b relie le premier volume intermédiaire 11d du vérin de droite 1d de l'autre essieu au second volume intermédiaire 12c du vérin de gauche 1c de cet essieu. Un conduit 17 relie les conduits 14a et 14b entre eux, le conduit 14b étant ainsi relié à l'accumulateur 15.

De manière analogue, un conduit 18a relie le premier volume intermédiaire 11a du vérin de gauche 1a de l'un des essieux au second volume intermédiaire 12b du vérin de droite 1b de cet essieu, ainsi qu'à un accumulateur hydro-pneumatique 19 par l'intermédiaire d'un amortisseur 20, cet accumulateur et cet amortisseur ayant pratiquement les mêmes caractéristiques respectivement que l'accumulateur 15 et l'amortisseur 16. Le conduit 18b relie le premier volume intermédiaire 11c du vérin de gauche 1c de l'autre essieu au second volume intermédiaire 12d du vérin de droite de cet essieu. Un conduit 21 relie entre eux les conduits 18a et 18b, le conduit 18b étant ainsi relié à l'accumulateur 19.

Les conduits 17 et 21 sont respectivement reliés par des conduits 22 et 23 à un verrou de roulis 24; un conduit 25 relie ce verrou de roulis au conduit 13a (ou 13b).

Le verrou de roulis est constitué par un tiroir 26 mobile dans un cylindre 27 et pouvant occuper deux positions, une première dans laquelle les trois conduits 22, 23 et 25 communiquent entre eux, et une seconde dans laquelle ces trois conduits sont isolés les uns des autres. Le tiroir est commandé par le volant de direction, par l'intermédiaire de moyens connus et non représentés au dessin, de façon qu'en position de ligne droite le tiroir se trouve dans sa première position et qu'à partir d'un seuil de braquage des roues il passe dans sa seconde position; ce seuil peut être variable en fonction de la vitesse du véhicule et/ou de la vitesse de la manœuvre de braquage. Ces moyens peuvent, par exemple, comrendre un électro-aimant propre à déplacer le tiroir 26 et actionné par un capteur de l'angle de pivotement du volant. Dans la première position du distributeur, l'ensemble des conduits 22, 23 et 25 n'est pas relié directement à la source de pression et au réservoir de liquide hydraulique. Il ne l'est que par l'intermédiaire du correcteur de hauteur; il est donc isolé aussi bien de la source de pression que du réservoir lorsque ce correcteur de hauteur est inactif.

On voit de la description qui précède que, dans un virage, les divers volumes 11a...11d et 12a...12d travaillent au roulis et constituent un anti-roulis. En effet, les trois conduits 22, 23 et 25 sont alors isolés. En cas de roulis, le vérin de droite sera sollicité dans un sens et le vérin de gauche dans un sens opposé. Du liquide est refoulé par exemple de la chambre intermédiaire 12a du vérin 1b, ainsi que de la chambre intermédiaire 11b du vérin 1b, qui est reliée au même accumulateur 15 que la chambre 12a. En même temps, du liquide est aspiré dans les deux volumes intermédiaires 11a et 12b qui sont tous deux reliés à l'autre accumulateur 19. Ainsi les deux accumulateurs 15 et 19 font intervenir leur élasticité et leur amortissement pour s'opposer au roulis.

En cas de pompage, les accumulateurs de roulis 15 et 19 ne sont pas sollicités. En effet, le liquide chassé de l'une des chambres intermédiaires d'un vérin, est aspiré dans la seconde chambre intermédiaire du vérin opposé.

Ce pompage ne fait intervenir que les raideurs des accumulateurs 4a, 4b, 4c et 4d.

En position de ligne droite, la fonction anti-roulis disparait. En effet, le liquide chassé de l'un des volumes intermédiaires, par exemple du volume 12a, passe par les conduits 22 et 23 et par le verrou de roulis 25, dans l'autre volume intermédiaire du même vérin, dans le cas présent le volume 11a, sans qu'il y ait intervention de l'élasticité et de l'amortissement des accumulateurs 15 et 19. Il est donc nécessaire pour maintenir le véhicule à plat en ligne droite, de prévoir un dispositif mécanique résiduel. Mais, en cas de pompage, l'élasticité des accumulateurs 4a, 4b, 4c et 4d continue d'intervenir puisque ces accumulateurs sont isolés aussi bien de la source de pression que du réservoir.

En ligne droite, le conduit 25 assure la liaison des accumulateurs 15 et 19 aux circuits de la suspension. Cela permet de maintenir la pression dans les deux accumulateurs 15 et 19, en dépit des fuites, et lie cette pression à la charge du véhicule.

Tel qu'il a été décrit jusqu'à présent, le dispositif anti-roulis est un dispositif passif. On peut le transformer en anti-roulis actif en prévoyant un vérin compensateur de roulis 28 constitué par le cylindre 29 dans lequel est monté coulissant un piston 30; celui-ci est muni de chaque côté d'une tige 31 ou 32 qui débouche à l'extérieur du cylindre, les deux tiges ayant même section de sorte que la surface active est la même pour les deux faces du piston.

Les deux chambres 33 et 34 délimitées dans le cylindre 29 par le piston 30, sont reliées respectivement au conduit 17, donc à l'accumulateur 15, et au conduit 21 donc à l'accumulateur 19. La tige de piston 31 est solidaire d'une crémaillère 35 qui est en prise avec un pignon 36 relié à l'arbre de sortie d'un moteur électrique 37. Celui-ci est commandé par un conditionneur 38 relié à des capteurs de positionnement 39 sensibles à la position angulaire instantanée de la caisse du véhicule par rapport à un référentiel fixe. Dans ces conditions, lorsque la caisse n'est pas rigoureusement horizontale pour une raison quelconque, les capteurs 39 commandent le moteur 37 qui fait déplacer le piston 30 dans le cylindre 29. Il en résulte une augmentation de la raideur de l'un des accumulateurs hydro-pneumatiques 15 et 19 et une diminution de la raideur de l'autre accumulateur.

La raideur de roulis du dispositif qui vient d'être décrit augmente avec la charge sur l'essieu dont la pression de suspension a été choisie comme pression de réalimentation en ligne droite (essieu avant dans le mode de réalisation représenté au dessin). On détermine en effet que, pour un angle $\alpha$ de roulis voisin de la position d'équilbre, la raideur de roulis pour un essieu est donnée par la formule

$$K\alpha = \frac{2\,\gamma\,F^2\;U r\;(U r + U' r)}{p_0\quad V_0}$$

dans laquelle $\gamma$ est le rapport des coefficients de compressibilité à pression et volume constants du gaz emprisonné dans les accumulateurs.

F est la charge sur l'essieu considéré
U est la voie de l'essieu
U' est la voie de l'autre essieu
r et r' sont les coefficients liés à la géométrie des vérins d'anti-roulis.
$p_0$ et $v_0$ sont la pression et le volume initiaux du gaz emprisonné.

On voit sur cette formule que la raideur du roulis croît comme le carré de la charge sur l'essieu de référence de réalimentation en ligne droite.

La pression de réalimentation en ligne droite peut être aussi une pression élaborée à partir de tout paramètre choisi: charges sur chacun des essieux, vitesse du véhicule, volonté du conducteur, etc.

La raideur du roulis augmente avec l'angle de roulis; en effet les accumulateurs 15 et 19 constituent des élasticités pneumatiques variables classiques.

L'infinité des combinaisons possibles des niveaux des anti-roulis mécaniques résiduels et des anti-roulis hydro-pneumatiques et de leurs répartitions respectives avant arrière permet d'obtenir globalement les lois de répartition des efforts au sol souhaités en fonction des paramètres choisis.

**Revendications**

1. Anti-roulis pour véhicule automobile muni d'une suspension hydro-pneumatique, les moyens de suspension comprenant, pour chaque roue du véhicule, un vérin (1a...1d) dont l'un des éléments, cylindre ou piston est relié mécaniquement à la partie suspendue du véhicule, son autre élément étant relié mécaniquement à la partie non suspendue, et dont la chambre sous pression (10a...10d) est raccordée à un accumulateur hydro-pneumatique (4a...4d), chaque vérin (1a...1d) comportant un piston étagé (6a...6d) formé de deux pistons (8a...8d, 9a...9d) qui sont raccordés par une tige (7a...7d) traversant de manière étanche une paroi transversale (3a...3d) du cylindre et qui délimitent un volume d'extrémité de suspension (10a...10d), compris entre l'un des pistons et l'extrémité du cylindre reliée à l'accumulateur hydro-pneumatique, un premier volume de roulis (11a...11d) compris entre ce piston et la paroi transversale, et un second volume de roulis (12a...12d) compris entre la paroi transversale et le second piston, les premiers volumes de roulis (11b et 11d) des deux vérins de droite étant raccordés aux seconds volumes de roulis (12a et 12c) des deux vérins de gauche 1a et 1c) ainsi qu'à un premier accumulateur hydro-pneumatique de roulis (15), alors que les premiers volumes de roulis (11a et 11c) des deux vérins de gauche (1a et 1c) sont raccordés aux seconds volumes de roulis (12b et 12d) des vérins de droite (1b et 1d) ainsi qu'à un second accumulateur hydro-pneumatique de roulis (19), et un distributeur hydraulique (24) admettant une position dans laquelle les circuits hydrauliques des accumulateurs hydro-pneumatiques pneumatiques de roulis (15 et 19) sont isolés l'un de l'autre, caractérisé en ce que le distributeur hydraulique (24) admet une seconde position dans laquelle ces circuits hydrauliques sont raccordés l'un à l'autre mais isolés normalement aussi bien de la source de pression que du réservoir de liquide hydraulique, et en ce que l'anti-roulis comporte en outre des moyens pour que les circuits hydrauliques des accumulateurs hydro-pneumatiques de roulis soient isolés l'un de l'autre au-delà d'un seuil d'angle au volant de direction et raccordés en-deçà du même seuil.

2. Anti-roulis hydro-pneumatique selon la revendication 1, caractérisé en ce que le distributeur hydraulique (24) comporte des moyens pour raccorder les circuits d'anti-roulis au volume de suspension supérieur (10a...10d) de l'un des vérins de suspension, quand il est dans sa position de raccordement.

3. Anti-roulis hydro-pneumatique selon la revendication 1 ou 2, caractérisé en ce qu'il comporte un vérin compensateur de roulis (28) comprenant un cylindre (29) dans lequel est monté coulissant un piston (30) muni de deux tiges identiques (31 et 32) débouchant de chaque côté, de telle sorte que le piston (30) sépare dans le cylindre (29) une première chambre (33) reliée hydrauliquement au premier accumulateur hydro-pneumatique de roulis (15) et une deuxième chambre (34) de même section, reliée au deuxième accumulateur hydro-pneumatique de roulis (19).

4. Anti-roulis hydro-pneumatique selon la revendication 3, caractérisé en ce qu'il comporte des moyens pour commander le vérin compensateur de roulis (28) à partir de paramètres de position du véhicule.

**Claims**

1. Anti-roll device for motor vehicles having a hydro-pneumatic suspension, the suspension means comprising, for each wheel of the vehicle, an actuator (1a...1d), one of the elements of which, cylinder or piston, is connected mechanically to the suspended part of the vehicle, its other element being connected mechanically to the non suspended part, and whose pressurized chamber (10a...10d) is connected to a hydro-pneumatic actuator (4a...4d), each actuator (1a...1d) comprising a stepped piston (6a...6d) formed of two pistons (8a...8d, 9a...9d) which are connected together by a rod (7a...7d) passing sealingly through a transverse wall (3a...3d) of the cylinder and which define an end suspension volume (10a...10d), between one of the pistons and the end of the cylinder connected to the hydro-pneumatic accumulator, a first roll volume (11a...11d) between this piston and the transverse wall and a second roll volume (12a...12d) between the transverse wall and the second piston, the first roll volumes (11b and 11d) of two right hand actuators being connected to the second roll volumes (12a and 12c) of the two left hand actuators (1a and 1c) as well as to a first hydro-pneumatic roll accumulator (15), whereas the first roll volumes (11a and 11c) of the two left hand actuators (1a and 1c) are connected to the second roll volumes (12b and 12d) of the right hand actuators (1b and 1d) as well as to a second hydro-pneumatic roll accumulator (19), and a hydraulic distributor (24) having a position in which the hydraulic circuits of the hydro-pneumatic roll accumulators (15 and 19) are isolated from each other, characterized in that the hydraulic distributor (24) has a second position in which these hydraulic circuits are connected to each other but normally isolated both from the pressure source and the hydraulic liquid reservoir, and in that the anti-roll device further comprises means so that the hydraulic circuits of the hydro-pneumatic roll accumulators are isolated from each other beyond a turning angle threshold of the steering wheel and connected short of this same threshold.

2. Hydro-pneumatic anti-roll device according to claim 1, characterized in that the hydraulic distributor comprises means for connecting th anti-roll circuits to the upper suspension volume (10a...10d) of one of the supension actuators, when it is in its connected position.

3. Hydro-pneumatic anti-roll device according to claim 1 or 2, characterized in that it comprises a roll compensating actuator (28) comprising a cylinder (29) in which is slidingly mounted a piston (30) having two identical rods (31 and 32) emerging on each side, so that the piston (30) separates, in the cylinder (29), a first chamber (33) connected hydraulically to the first hydro-pneumatic roll actuator (15) and a second chamber (34) of the same cross section connected to the second hydro-pneumatic roll actuator (19).

4. Hydro-pneumatic anti-roll device according to claim 3, characterized in that it comprises means for controlling the roll compensating actuator (28) from position parameters of the vehicle.

## Patentansprüche

1. Querstabilisierungsanordnung für Kraftfahrzeuge mit einer hydropneumatischen Aufhängung, bei der die Aufhängungsmittel für jedes Fahrzeugrad eine Winde (1a...1d) aufweisen, von der eines der Elemente Zylinder oder Kolben mechanisch mit dem aufgehängten Teil des Fahrzeugs verbunden ist, während ihr anderes Element mechanisch mit dem nicht aufgehängten Teil verbunden ist und deren Druckkammer (10a...10d) an einen hydropneumatischen Druckspeicher (4a...4d) angeschlossen ist, wobei jede Winde (1a...1d) einen mehrstufigen Kolben (6a...6d) aufweist, der aus zwei Kolben (8a...8d, 9a...9d) aufgebaut ist, die über eine dichtend durch eine Querwand (3a...3d) des Zylinders geführte Stange (7a...7d) miteinander verbunden sind und die ein End-Aufhängevolumen (10a...10d) abgrenzen, das zwischen einem der Kolben und dem Ende des Zylinders, welches mit dem hydropneumatischen Druckspeicher verbunden ist, angeordnet ist, sowie ein erstes Wankvolumen (11a...11d), das zwischen diesem Kolben und der Querwand angeordnet ist, und ein zweites Wankvolumen (12a...12d), das zwischen der Querwand und dem zweiten Kolben angeordnet ist, wobei die ersten Wankvolumina (11a...11d) der beiden rechten Winden mit den zweiten Wankvolumina (12a und 12c) der beiden linken Winden (1a und 1c) sowie mit einem ersten hydropneumatischen Wank-Druckspeicher (15) verbunden sind, während die ersten Wankvolumina (11a und 11c) der beiden linken Winden (1a und 1c) mit den zweiten Wankvolumina (12b und 12d) der rechten Winden (1b und 1d) sowie mit einem zweiten hydropneumatischen Wank-Druckspeicher (19) verbunden sind, und einen hydraulischen Verteiler (24), der eine Stellung zuläßt, in welcher die Hydraulikkreise der hydropneumatischen Wank-Druckspeicher (15 und 19) voneinander getrennt sind, dadurch gekennzeichnet, daß der hydraulische Verteiler (24) eine zweite Stellung zuläßt, in welcher diese Hydraulikkreise miteinander verbunden, aber normalerweise sowohl von der Druckquelle als auch vom Reservoir für die Hydraulikflüssigkeit abgetrennt sind, und daß die Querstabilisierungsanordnung außerdem Mittel aufweist zur Trennung der Hydraulikkreise der hydropneumatischen Wank-Druckspeicher voneinander jenseits eines Schwellenwertes für den Winkel des Lenkrades und zu ihrer Verbindung miteinander diesseits desselben Schwellenwertes.

2. Querstabilisierungsanordnung nach Anspruch 1, dadurch gekennzeichnet, daß der hydraulische Verteiler (24) Mittel aufweist zur Verbindung der Querstabilisierungskreise mit dem oberen Aufhängevolumen (10a...10d) einer der Aufhängewinden, wenn er sich in seiner Verbindungsstellung befindet.

3. Querstabilisierungsanordnung nach Anspruch 1 oder 2, dadurch gekennzeichnet, daß sie eine Wank-Ausgleichswinde (28) aufweist mit einem Zylinder (29), in welchem ein Kolben (30) gleitend geführt ist, der mit zwei identischen Stangen (31 und 32) versehen ist, die von jeder Seite ausgehen, derart, daß der Kolben (30) in dem Zylinder (29) eine erste Kammer (33) abtrennt, die hydraulisch mit dem ersten hydropneumatischen Wank-Druckspeicher (15) verbunden ist und eine zweite Kammer (34) mit gleichem Querschnitt, die mit dem zweiten hydropneumatischen Wank-Druckspeicher (19) verbunden ist.

4. Querstabilisierungsanordnung nach Anspruch 3, dadurch gekennzeichnet, daß sie Mittel aufweist zur Steuerung der Wank-Ausgleichswinde (28) ausgehend von Stellungsparametern des Fahrzeugs.